# EUROPEAN PATENT SPECIFICATION

(11) **EP 2 453 641 B1**
(45) Date of publication and mention of the grant of the patent: **12.11.2014**
(21) Application number: 11803256.4
(22) Date of filing: 12.04.2011
(51) Int. Cl.: H04M 11/00, H04Q 9/00, H04W 84/18, H04B 7/155, G01D 4/00

(54) **REPEATER, AUTOMATED WIRELESS METER READING SYSTEM PROVIDED WITH SAME, AND RELAY METHOD**
VERSTÄRKER, AUTOMATISIERTES DRAHTLOSES MESSGERÄTLESESYSTEM DAMIT UND RELAISVERFAHREN DAFÜR
RÉPÉTEUR, SYSTÈME DE LECTURE DE COMPTEUR SANS FIL AUTOMATISÉ QUI EN DISPOSE, ET PROCÉDÉ DE RELAIS

(30) Priority: 07.07.2010 JP 2010154565
(43) Date of publication of application: 16.05.2012
(73) Proprietor: Panasonic Corporation, Kadoma-shi Osaka 571-8501 (JP)
(72) Inventor: KOBA, Yasuo, Osaka-shi, Osaka 540-6207 (JP); YAMAMOTO, Masahiro, Osaka-shi, Osaka 540-6207 (JP); HORIIKE, Yoshio, Osaka-shi, Osaka 540-6207 (JP); WATANABE, Takashi, Osaka-shi, Osaka 540-6207 (JP)
(74) Representative: Schwabe - Sandmair - Marx
(86) International application number: PCT/JP2011/002155
(87) International publication number: WO 2012/004914

(56) References cited:
- EP-A2- 0 401 974
- WO-A1-2009/130918
- JP-A- 8 172 491
- JP-A- 9 331 284
- JP-A- 2010 130 324
- US-A1- 2009 115 626
- US-A1- 2010 020 740

## Description

### Technical Field

The present invention relates to a relay device for use in an automated radio meter reading system, the automated radio meter reading system including the relay device, and a relay method.

### Background Art

There is known an automated meter reading system which automatically reads a meter value of a usage amount of gas, tap water, electricity, etc., and performs radio (wireless) communication between an adapter and an access point to transmit and receive data of the read meter value between them (see, e.g., Patent Literature 1). In the automated meter reading system disclosed in Patent Literature 1, in a case where a distance between the access point and the adapter is so great that direct radio communication between them is unfeasible, plural relay devices are provided. And, the plural relay devices sequentially incorporate their destinations into a telegram and transmit the telegram, thereby reducing processing time required to add destinations to memories for buffering data in the relay devices.

### Citation Lists

### Patent Literature

Patent Literature 1: Japanese Laid-Open PatentApplication PublicationNo. JP08172491

### Summary of the Invention

### Technical Problem

However, in the above stated conventional configuration, in a case where relay is performed in multiple stages via several relay devices, the destinations of the relay devices corresponding to the multiple relay stages must be incorporated into the telegram, which makes a destination portion of the telegram long (particularly, the destination portion of the telegram becomes longer when destination codes of the relay devices are long). If there is a time limitation, for example, a time period per transmission and reception must be set within several seconds (e.g., one second) in an area or the like where radio communication is restricted, the telegram cannot be transmitted and received. Also, even when the number of data (volume) incorporated into the telegram is reduced, the destination portion is long. Therefore, the amount of current consumption required to transmit and receive the telegram cannot be reduced.

WO 2009/130918 A describes a node device which has a simple configuration and can autonomously select an appropriate path without exerting a load on a network. A program for the node device is also provided. In a node device in a communication network, a FID for uniquely identifying a frame and information about a node to which the frame is transmitted are stored in a FID management table, and weighting information about another node to which the frame is transmitted to relay the frame is stored in a weighting table for each final destination node of the frame. If the FID management table contains the FID of the received frame which is transmitted to the node, data about the transmission destination node associated with the FID is updated. If the FID management table does not contain the FID of the frame received by a frame receiving means, the weighting table corresponding to the destination node of the frame is checked to determine another node to which the frame is to be addressed to relay the frame.

US 2009/115626 A1 describes an automatic meter reading (AMR) data communication network for relaying meter commodity information includes a commodity provider node, a gateway node configured to communicate with the commodity provider node, and meter nodes configured to measure commodity characteristic data and communicate with the gateway node and with other meter nodes. A source node of the meter nodes generates a data packet that includes meter commodity information to be relayed to the commodity provider node, and when a first meter node of the meter nodes receives the source data packet, the first meter node relays the source data packet to a second node. The second node can include another meter node, a repeater node, the gateway node, or the commodity provider node. In an embodiment, the first meter node determines whether the data packet specifies a relay path for relaying the source data packet to the commodity provider node.

US 2010/020740 A1 relates to a wireless communication system. A set-N table is a table holding information regarding other wireless communication devices that can be reached from a wireless communication device (a node) in one hop. A set-N2 table is a table holding information regarding other wireless communication devices that can be reached from a wireless communication device in two hops. A set-F table is a table holding information regarding nodes whose reachability of flooding from the wireless communication device has not been verified. An MPR setting unit sets optimal MPR nodes with consideration of communication states of links in a wireless ad hoc network by selecting, with consideration of communication states of links between individual nodes, the communication states of links being held in the set-N table and the set-N2 table, MPR nodes and setting the MPR nodes in an MPR table while deleting nodes whose reachability of flooding has been verified from the set-F table.

EP 0 401 974 A2 relates to a single frequency radio transmission system. In this respect, a radio transmission system designed to be operated on a single defined frequency channel is described. The system comprises a central receiver, at least one transmitter remote from the receiver and a plurality of repeaters arranged in zones around the receiver. Each repeater can receive a signal from a transmitter and re-transmit the message so that it eventually reaches the receiver by way of one or more repeaters. The system includes protection means for protecting the message against loss or corruption, for example by using unique time delays before re-transmission or by addressing a certain sequence of repeaters with alternate paths being provided to guard against the message being lost.

### SUMMARY OF THE INVENTION

The invention is defined by the subject-matter of the independent claims. The dependent claims are directed to advantageous embodiments.

### ADVANTAGES OF THE INVENTION

Advantageously, it is provided a relay device which can make a destination portion of the relay device shorter, when relay is performed in multiple stages, an automated radio meter reading system including the relay device, and a relay method.

Advantageously, a relay device for relaying communication information communicated between an access point and an adapter, comprises: a reception means for receiving the communication information transmitted to said relay device itself; a memory means having one or more memory areas, the memory means being configured to store ID of each communication device which is a next transmission destination, in each of the memory areas; a reading means for reading route information from the communication information, said route information including information specifying the memory area storing the ID of the communication device which is the next transmission destination and indicating a route constituted by a communication devices provided in a range from at least said relay device itself to a final transmission destination; a transmission destination identifying means for identifying the ID of the communication device which is the next transmission destination, based on the memory area stored in the memory means and the route information read by the reading means; and a transmission means for transmitting the communication information to the communication device identified by the transmission destination identifying means.

In such a configuration, the relay device has only to store only ID of each communication device which is a next transmission destination of the relay device itself. Therefore, information amount (length of telegram) of the memory area can be made less than information amount (length of telegram) of the ID of the communication device, thereby reducing the length of the route information (destination). To be specific, for example, the relay device may store the ID (e.g., numeric value of 14 digits and/or symbols) of the communication device in association with (or in a transformed form of) the memory area (e.g., numeric value of 1 ∼ 2 digits and/or symbols). Thus, the route information (destination) can be made shorter in length. Since the route information can be made shorter in length, the number of data incorporated into the communication information (telegram) can be increased.

The above and further features and advantages of the invention will more fully be apparent from the following detailed description with accompanying drawings.

In accordance with a relay device, an automated radio meter reading system including the relay device, and a relay method of the present invention, a transmission and reception time period can be made short in length by making the route information contained in the communication information shorter, and thus the amount of current consumption at the radio transmission and reception can be reduced.

### Brief Description of the Drawings

[Fig. 1] Fig. 1 is a block diagram schematically showing a configuration of an automated radio (wireless) meter reading system according to Embodiment 1 of the present invention.
[Fig. 2] Fig. 2 is a schematic view showing a configuration of an access point in the automated radio meter reading system of Fig. 1.
[Fig. 3] Fig. 3 is a schematic view showing a configuration of a relay device in the automated radio meter reading system of Fig. 1.
[Fig. 4] Fig. 4 is a schematic view showing a configuration of an adapter in the automated radio meter reading system of Fig. 1.
[Fig. 5A] Fig. 5A is a schematic view showing the operation performed until route information is registered in the automated radio meter reading system according to Embodiment 1.
[Fig. 5B] Fig. 5B is a schematic view showing the operation performed until route information is registered in the automated radio meter reading system according to Embodiment 1.
[Fig. 6] Fig. 6 is a schematic view showing the operation of the relay device in the automated radio meter reading system according to Embodiment 1.
[Fig. 7A] Fig. 7A is a schematic view showing the operation for transmitting meter reading request information in the automated radio meter reading system according to Embodiment 1.
[Fig. 7B] Fig. 7B is a schematic view showing the operation for transmitting the meter reading request information in the automated radio meter reading system according to Embodiment 1.
[Fig. 8A] Fig. 8A is a schematic view showing the operation for transmitting meter reading response information in the automated radio meter reading system according to Embodiment 1.
[Fig. 8B] Fig. 8B is a schematic view showing the operation for transmitting the meter reading response information in the automated radio meter reading system according to Embodiment 1.

### Description of the Embodiments

Hereinafter, embodiment of the present invention will be described with reference to the drawings. Throughout the drawings, the same or corresponding parts are designated by the same reference numerals and repetitive description thereof is sometimes omitted. Throughout the drawings, components required to explain the present invention are extracted and depicted, and other components are omitted. Furthermore, the present invention is in no way limited to the following embodiment.

### (Embodiment 1)

A relay device for relaying communication information communicated between an access point and an adapter, according to Embodiment 1 of the present invention, comprises a reception means for receiving the communication information transmitted to said relay device itself; a memory means having one or more memory areas, the memory means being configured to store ID of each communication device which is a next transmission destination, in each of the memory areas; a reading means for reading route information from the communication information, said route information including information specifying the memory area containing the ID of the communication device which is the next transmission destination and indicating a route constituted by communication devices provided in a range from at least said relay device itself to a final transmission destination; a transmission destination identifying means for identifying the ID of the communication device which is the next transmission destination, based on the memory area stored in the memory means and the route information read by the reading means; and a transmission means for transmitting the communication information to the communication device identified by the transmission destination identifying means.

In the relay device according to Embodiment 1, the communication information may include ID of a communication device which is a transmission source; said relay device further comprising: a determiner means for determining whether or not the ID of the communication device which is the transmission source matches ID stored in the memory means; and a route information creating means for creating the communication information such that a memory area of the memory means in which the ID of the communication device which is the transmission source is stored is incorporated into the route information, when the determiner means determines that the ID of the communication device which is the transmission source matches the ID stored in the memory means; wherein the transmission means may be configured to transmit the communication information created by the route information creating means to a communication device which is a transmission destination pre-registered.

In the relay device according to Embodiment 1, the communication information may include ID of a communication device which is a transmission source; said relay device further comprising: a determiner means for determining whether or not the ID of the communication device which is the transmission source matches ID stored in the memory means; and a route information creating means for creating the communication information such that the ID of the communication device which is the transmission source is stored in a memory area of the memory means and said memory area of the memory means in which the ID of the communication device which is the transmission source is stored is incorporated into the route information, when the determiner means determines that the ID of the communication device which is the transmission source does not match the ID stored in the memory means; wherein the transmission means may be configured to transmit the communication information created by the route information creating means to a communication device which is a transmission destination pre-registered.

In the relay device according to Embodiment 1, the route information may be information specifying memory areas in an order of relay devices arranged in a route from the access point to the adapter.

In the relay device according to Embodiment 1, the transmission destination identifying means may be configured to delete information contained in the route information and identifying said relay device itself, from the route information, before the transmission means transmits the communication information.

In the relay device according to Embodiment 1, the memory means may be configured to store in a table or a map, a correspondence between ID of another communication which is the next transmission destination and the memory area.

An automated radio meter reading system according to Embodiment 1 comprises the above relay device, an access point; and an adapter.

In the automated radio meter reading system according to Embodiment 1, the access point may include a memory means for storing in each of memory areas, ID of the adapter, ID of a relay device located in a first order in a route leading to the adapter, and route information indicating the route leading to the adapter.

In the automated radio meter reading system according to Embodiment 1, the memory means of the access point may be configured to store in a table or a map, the ID of the adapter, the ID of the relay device located in the first order in the route leading to the adapter, and a correspondence between the route information indicating the route leading to the adapter and the memory area.

In the automated radio meter reading system according to Embodiment 1, the adapter may include a memory means containing ID of said adapter itself.

### [Configuration of automated radio meter reading system]

First of all, a description will be given of the configuration of an automated radio meter reading system according to Embodiment 1 of the present invention.

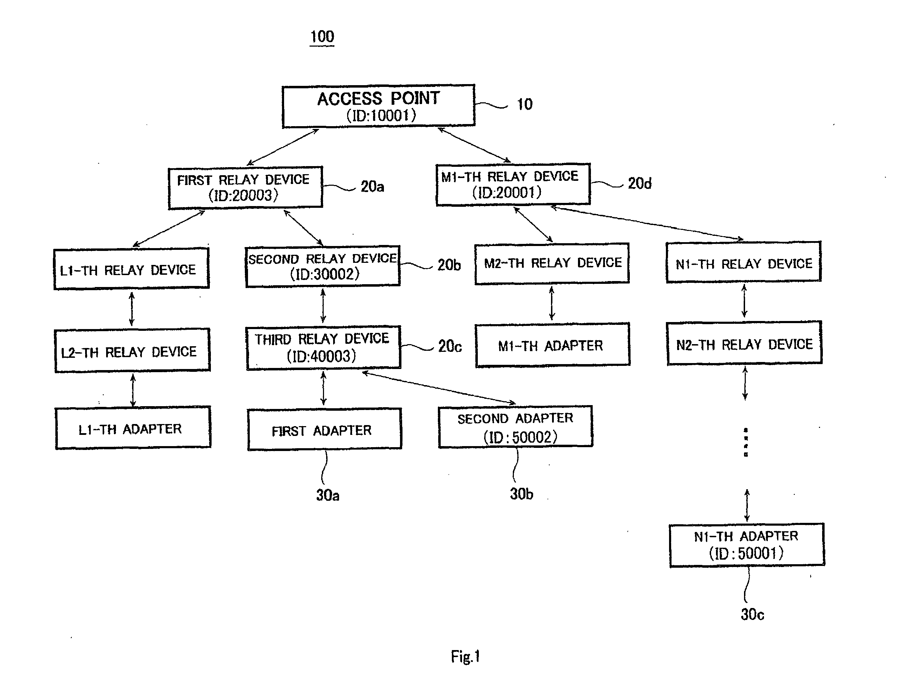

Fig. 1 is a block diagram schematically showing the configuration of the automated radio meter reading system according to Embodiment 1 of the present invention.

As show in Fig. 1, an automated radio (wireless) meter reading system 100 according to Embodiment 1 comprises at least one access point 10, plural relay devices 20 such as a first relay device 20a, a second relay device 20b, a third relay device 30c, and the like, and one or more adapters 30 such as a first adapter 30a, and a second adapter 30b. In description given below, the wording "the first relay device 20a," "the second relay device 20b," or the "third relay device 30c" is used when the individual relay devices are distinguished, while the wording "the relay device 20" is used when they are not distinguished. In the same manner, the wording "the first adapter 30a" or "the second adapter 30b" is used when the individual adapters are distinguished, while the wording "adapter 30" is used when they are not distinguished.

The relay device 20 is configured to relay communication information communicated between the access point 10 and the adapter 30. To be specific, the relay device 20 relays communication information in such a way that it receives the communication information transmitted from the access point 10 and transmits the communication information to the adapter 30. Likewise, the relay device 20 relays communication information in such a way that it receives the communication information transmitted from the adapter 30 and transmits the communication information to the access point 10.

### [Configuration of access point]

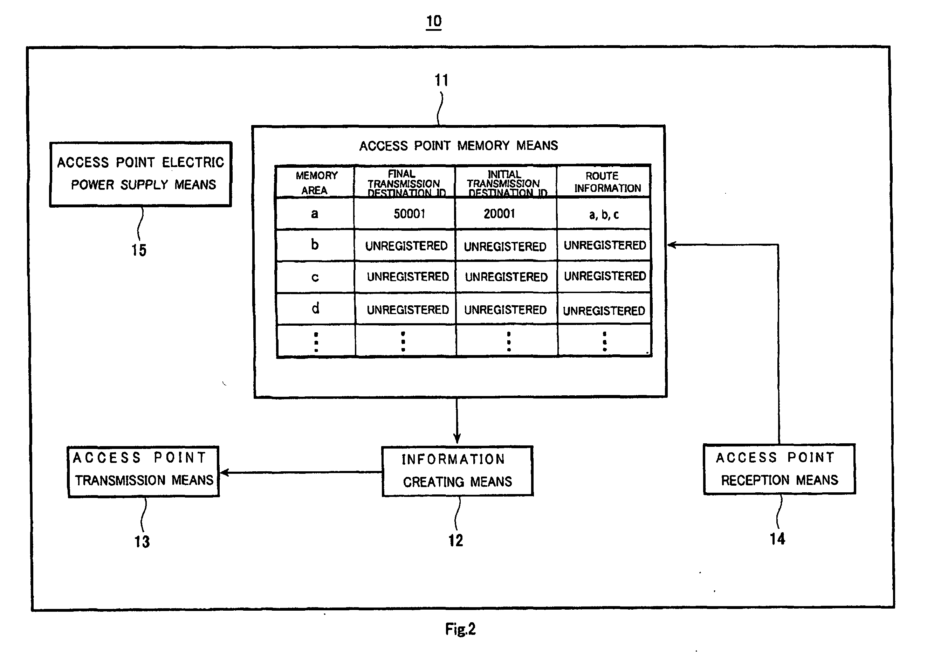

Next, a description will be given of the configuration of the access point 10 with reference to Fig. 2.

Fig. 2 is a schematic view showing the configuration of the access point in the automated radio meter reading system of Fig. 1.

As shown in Fig. 2, the access point 10 includes an access point memory means 11, an information creating means 12, an access point transmission means 13, an access point reception means 14, and an access point electric power supply means 15. In the access point 10, the sections configured similarly to those of an access point of a general device will not be described.

The access point memory means 11 is constituted by a memory or the like, and contains information such as meter reading information, and programs for executing control operation of the sections of the access point 10. As shown in Fig. 2, the access point memory means 11 has plural memory areas "a, b, c," and the like, and contains a final (ultimate) transmission destination ID, an initial transmission destination ID, and route information, in each of the memory areas. As defined herein, the wording "final (ultimate) transmission destination" refers to a device to which the communication information transmitted from the access point 10 is finally transmitted. To be specific, the final transmission destination is an adapter. The wording "initial transmission destination" refers to the relay device 20 to which the information is transmitted initially from the access point 10. The wording "route information" contains information for specifying a memory area in which ID of a communication device which is a next transmission destination is stored, and refers to information indicating a route at least from the communication device itself to the final transmission destination. Note that the route information is created prior to installing the adapter, for example, and a next communication device is determined (decided) based on the route information, when meter reading request information which is communication information is transmitted.

To be specific, for example, 50001 which is ID of a N1-th adapter 30c (see Fig. 1) is stored in the memory area "a" as the final transmission destination ID. In addition, for example, 20001 which is ID of a M1-th relay device 20d (see Fig. 1) is stored in the memory area "a" as the initial transmission destination ID. Furthermore, "a, b, c" which are memory areas in memory means of lower communication devices are stored in the memory area "a" as the route information. A detailed content of the route information will be described later.

The information creating means 12 creates communication information such as meter reading request information transmitted to the adapter 30. The information creating means 12 is implemented in such a manner that a processor unit typified by a microprocessor, a CPU, etc., incorporated in the access point 10 executes a predetermined program stored in the access point memory means 11. The access point transmission means 13 transmits the communication information created by the information creating means 12 to the relay device 20 (or adapter 30). The access point reception means 14 receives the communication information transmitted from the relay device 20 (or adapter 30). The access point electric power supply means 15 is an electric power supply for enabling the access point 10 to be actuated, and may be constituted by an electric power supply such as a dry battery (primary battery).

### [Configuration of relay device]

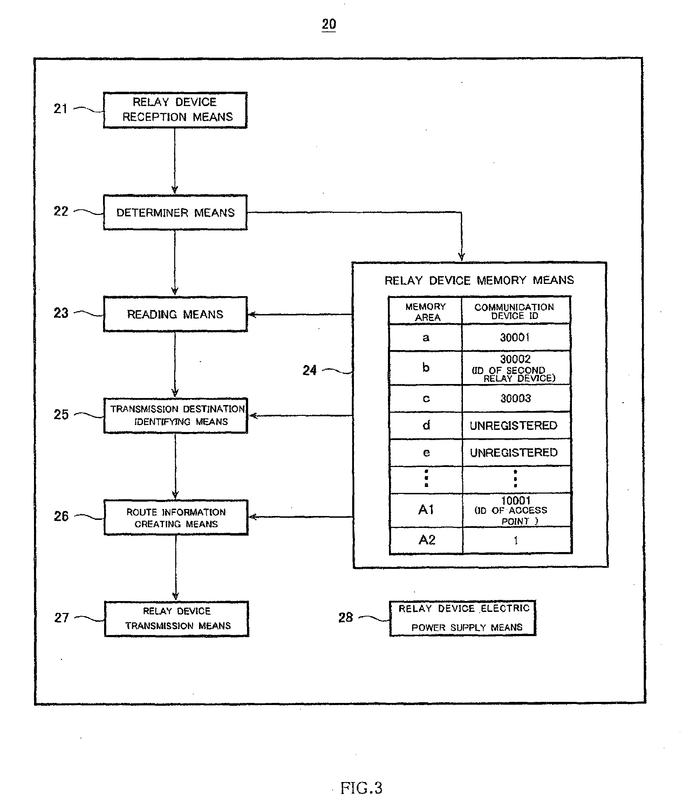

Next, the configuration of the relay device 20 will be described with reference to Fig. 3.

Fig. 3 is a schematic view showing the configuration of a relay device in the automated radio meter reading system of Fig. 1.

As shown in Fig. 3, the relay device 20 includes a relay device reception means 21, a determiner means 22, a reading means 23, a relay device memory means 24, a transmission destination identifying means 25, a route information creating means 26, a relay device transmission means 27, and a relay device electric power supply means 28. The relay device electric power supply means 28 is an electric power supply for allowing the relay device 30 to be actuated, and is constituted by, for example, an electric power supply such as a dry battery (primary battery). In the relay device 20, the sections configured similarly to those of a relay device of a general radio device will not be described.

The relay device memory means 24 is constituted by a memory, or the like, and contains information of ID or the like of the communication device, and programs for executing control operation of the sections of the relay device 20. To be specific, as shown in Fig. 3, the relay device memory means 24 has plural memory areas "a, b, c" and the like, and contains in respective memory areas, ID of a communication device (another relay device 20 and/or adapter 30) which is in a lower order of itself, ID of a communication device (another relay device 20 and/or access point 10) which is in an upper order of itself, and identifying information. The wording "communication device in an upper order of itself" refers to a communication device located closer to the access point 10 than itself The wording "communication device in a lower order of itself" refers to a communication device located closer to the adapter 30 than itself. The wording "identifying information" is information unique to itself, indicating which portion of the route information should be read, and means the order of itself from the access point 10.

The ID of the communication device which is in an upper order of itself, and the identifying information are set automatically or manually in installation of the relay device 20, and are stored in the relay device memory means 24. The identifying information is reset automatically or manually and is stored (updated) in the relay device memory means 24, along with setting of identifying information of the another relay device 20, when another relay device 20 is installed in an upper order or lower order of itself.

In more detail, "30001," "30002" (ID of second relay device 20b), and "30003" are stored in the memory areas "a ∼ c", respectively, of the relay device memory means 24, respectively, as IDs of communication devices which are in lower orders of itself. Although the IDs of the lower communication devices are stored in the memory areas "a ∼ c," respectively, information stored in the memory areas are not limited to this. IDs of another lower communication devices may be stored in the memory areas "a - c," or IDs of lower communication devices may be stored in memory areas which are a memory area "d" and the following memory area.

"10001" which is ID of the access point 10 is stored in a memory area "A1" as ID of a communication device which is an upper order of itself. "1" is stored in a memory area "A2" as identifying information. Since the identifying information is "1," the relay device 20 is a relay device located in a first order from the access point 10. As described later, the transmission destination identifying means 25 reads information present in a first order in the route information.

The relay device reception means 21 receives communication information transmitted from another communication device (access point 10, another relay device 20, or adapter 30). The determiner means 22 is configured to determine whether or not ID of a transmission source communication device which is contained in the communication information received in the relay device reception means 21 matches ID prestored in the relay deice memory means 24.

The reading means 23 reads the route information from the communication information transmitted from the transmission source communication device. The transmission destination identifying means 25 identifies ID of a communication device which is a next transmission destination, based on the route information read by the reading means 23, the memory area stored in the relay device memory means 24, ID of a communication device corresponding to that memory area, and the identifying information. The route information creating means 26 adds the route information to the communication information or deletes the route information therefrom, and changes the transmission destination ID and the transmission source ID contained in the communication information.

Later, a description will be given of a method of identifying the ID of the communication device which is the next transmission destination which is performed by the transmission destination identifying means 25, and a method of creating the route information which is performed by the route information creating means 26. The determiner means 22, the reading means 23, the transmission destination identifying means 25, and the route information creating means 26 are each implemented in such a manner that a processor unit typified by a microprocessor, a CPU, etc., incorporated into the relay device 20 executes a predetermined program stored in the relay device memory means 24.

The relay device transmission means 27 transmits the communication information to the transmission destination communication device identified by the transmission destination identifying means 25, or the communication device which is in an upper order of itself. In a case where the relay device transmission means 27 transmits the communication information to the communication device which is in an upper order of itself, it is configured to transmit the communication information to one communication device prestored in the relay device memory means 24. Because of this, in a case where the adapter 30 transmits the communication information to the access point 10, the communication information transmitted from a communication device which is in a lower order of itself can be transmitted to the communication device which is in an upper order of itself, without using the route information as described later.

For example, the determiner means 22 may be omitted from the relay device 20, in a case where the relay device 20 can identify a communication device which is a transmission source, without determining the communication device which is the transmission source in the determiner means 22, for example, a time period in which communication information is transmitted from a communication device in an upper order of itself and a time period in which the communication information is transmitted from a communication device in a lower order of itself, are fixed.

### [Configuration of adapter]

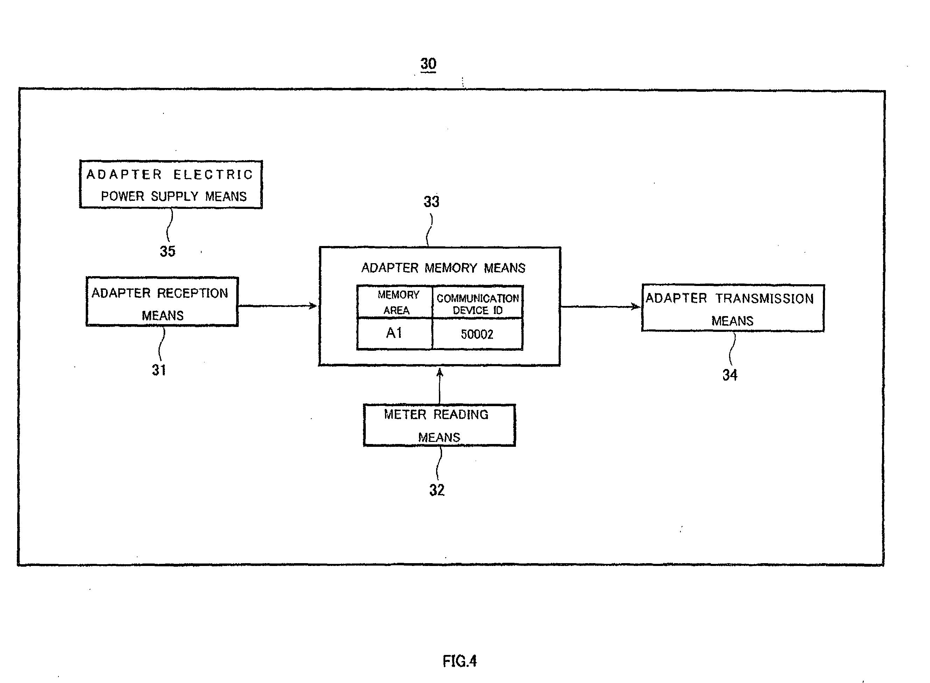

Next, the adapter 30 will be described with reference to Fig. 4.

Fig. 4 is a schematic view showing the configuration of the adapter in the automated radio meter reading system of Fig. 1.

As shown in Fig. 4, the adapter 30 includes an adapter reception means 31, a meter reading means 32, an adapter memory means 33, an adapter transmission means 34, and an adapter electric power supply means 35. The adapter reception means 31 receives communication information such as meter reading request information which is transmitted from the access point 10 via the relay device 20. The meter reading means 32 reads a value of a gas meter (not shown) connected to the adapter 30.

The adapter memory means 33 is constituted by a memory, etc., and contains information such as ID of itself and meter reading information such as a meter reading value, and programs for executing control operation of the sections of the adapter 30. As shown in Fig. 4, in the present embodiment, the adapter memory means 33 contains 50002 which is ID of itself (e.g., second adapter 30b) in a memory area "A1".

The adapter transmission means 34 transmits the communication information including the meter value read by the meter reading means 32, to the relay device 20 or to the access point 10. Although the adapter 30 includes the meter reading means 32 in Embodiment 1, the present invention is not limited to this. Alternatively, the adapter 30 may not be provided with the meter reading means 32, but may obtain the meter reading information from the gas meter by communication.

In the automated radio meter reading system 100 of Embodiment 1 configured as described above, the adapter 30 receives the meter reading request information transmitted from the access point 10 via the relay device 20, and transmits the meter reading response information to the access point 10, via the relay device 20.

Although in Embodiment 1, the relay device 20 causes the relay device memory means 24 to store (set) the ID of one communication device which is in an upper order of itself, the present invention is not limited to this. Alternatively, the relay device 20 may cause the relay device memory means 24 to store IDs of plural communication devices which are in upper orders of itself. In this case, the relay device 20 may set a communication device to which the communication information is transmitted preferentially, from among the plural upper communication devices.

### [Operation of automated radio meter reading system]

Next, a description will be given of the operation of the automated radio meter reading system 100 of Embodiment 1.

### (1) Creation of route information

Initially, a description will be given of the operation of the access point 10 for storing route information of a route leading to the adapter 30 which is a final (ultimate) transmission destination, with reference to Figs. 1 to 6.

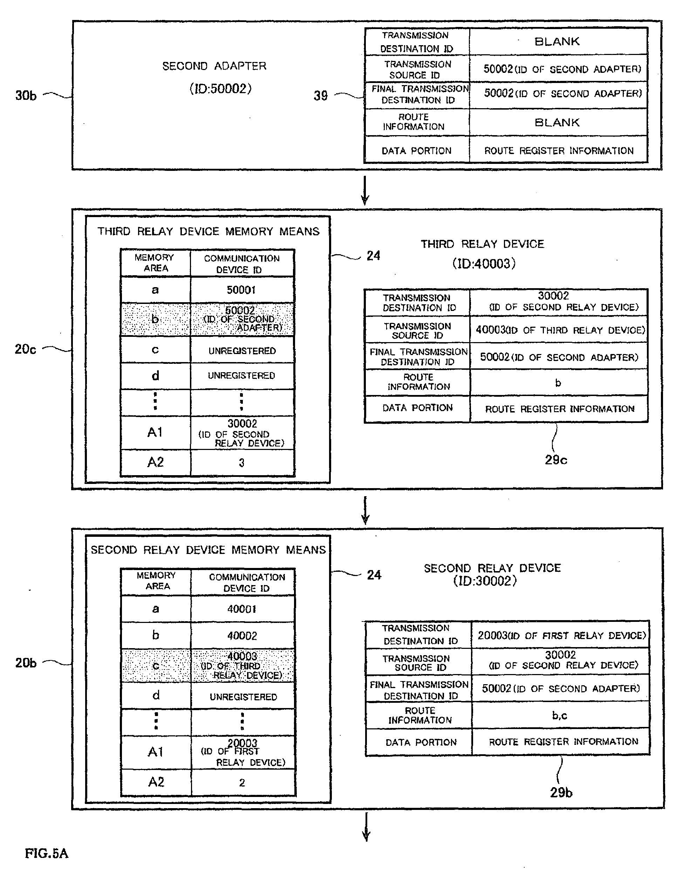

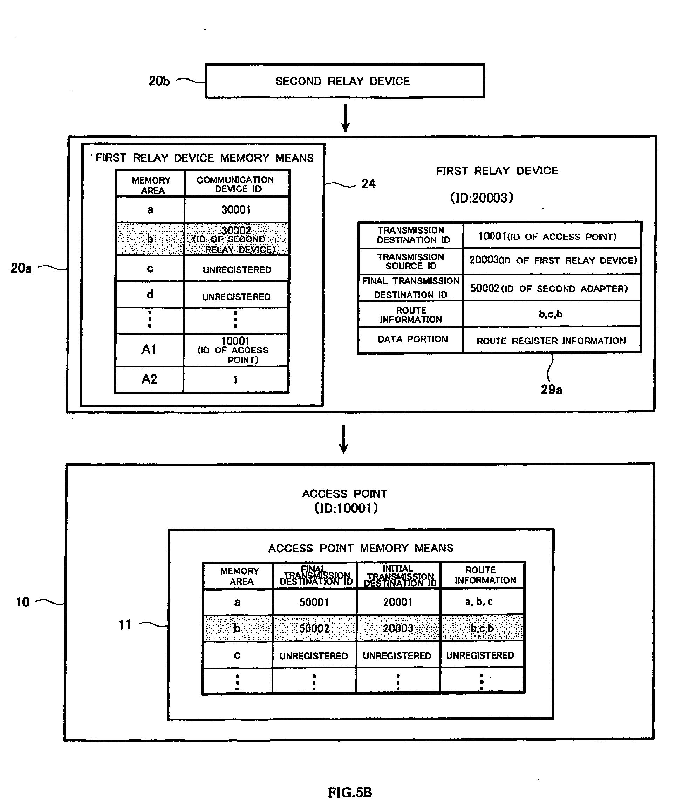

Figs. 5A and 5B are schematic views showing the operation performed until the route information is registered in the automated radio meter reading system according to Embodiment 1.

As shown in Fig. 1, it is supposed that the second adapter 30b is newly installed. At this time, an operator installs the second adapter 30b and thereby creates the route information of the route leading to the second adapter 30b. The second adapter 30b operates as follows to register the created route information and the ID of the second adapter 30b in the access point 10.

To be specific, the processor unit (not shown) of the second adapter 30b creates communication information 39 which is a route register command (see Fig. 5A). To be more specific, the processor unit of the second adapter 30b obtains ID 50002 of itself from the adapter memory means 33 and incorporates this ID (50002) into the communication information 39 as ID of a transmission source and ID of a final transmission destination from the access point 10. In addition, the processor unit of the second adapter 30b puts the route register information in a data portion of the communication information 39.

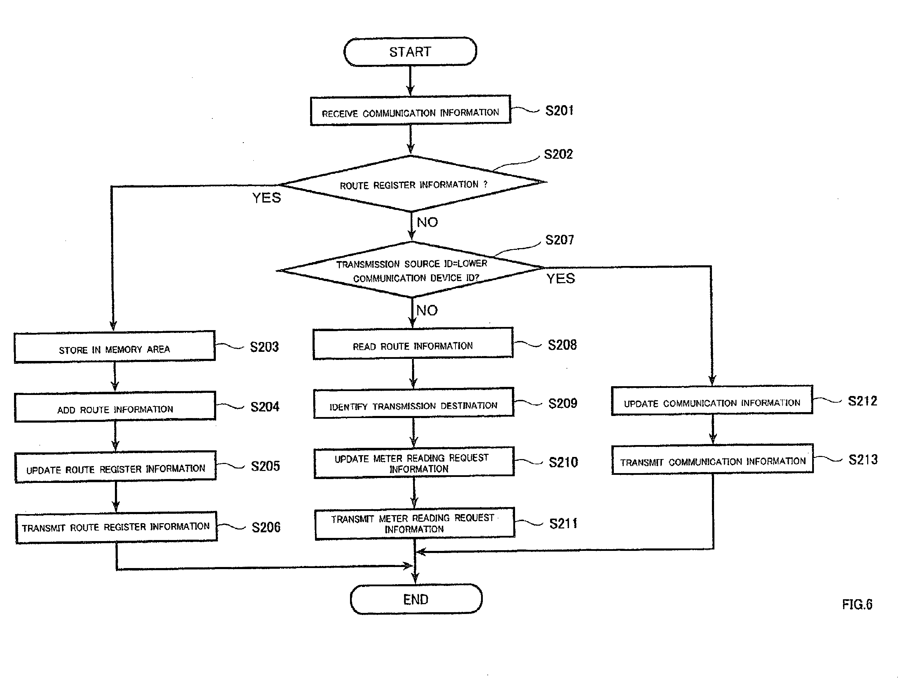

Then, the adapter transmission means 34 of the second adapter 30b transmits the communication information 39. It is now assumed that, for example, the relay device reception means 21 of the third relay device 20c receives the communication information 39. Hereinafter, a description will be given of the operation of the relay device 20 (in the present embodiment, third relay device 20c), with reference to Fig. 6.

Fig. 6 is a schematic view showing the operation of the relay device in the automated radio meter reading system according to Embodiment 1.

As shown in Fig. 6, firstly, the relay device reception means 21 of the third relay device 20c receives the communication information 39 (step S201). Thereupon, the determiner 22 of the third relay device 20c determines whether or not the communication information 39 contains route register information (step S202).

If the determiner 22 of the third relay device 20c determines that the communication information 39 received in the relay device reception means 21 in step S201 contains the route register information (YES in step S202), a flow (route register process) shown in step S203 ∼ 206 is executed. If the determiner 22 of the third relay device 20c determines that the communication information 39 received in the relay device reception means 21 in step S201 does not contain the route register information (NO in step S202), the process goes to step 5207, which will not be described in detail.

In step S203,the reading means 23 of the third relay device 20c reads the communication information 39, and causes ID (50002) of the transmission source to be stored in the memory area "b" of the relay device memory means 24 of the third relay device 20c (see Fig. 5A). Then, the route information creating means 26 of the third relay device 20c incorporates into, the rote information of the communication information, the memory area "b" in which the ID of the transmission source is stored (step S204) (see Fig. 5A). Although the reading means 23 causes the ID of the transmission source to be stored in the memory area "b" of the relay device memory means 24, the present invention is not limited to this, but may cause the ID of the transmission source to be stored in another memory area.

The route information creating means 26 of the third relay device 20c updates the communication information 39 into communication information 29c (step S205). To be specific, the route information creating means 26 of the third relay device 20c changes the transmission source ID of the communication information 39 into 40003 which is the ID of itself, and changes the transmission destination ID of the communication information 39 into 30002 which is the ID of the second relay device 20b in an upper order, which is pre-stored in the memory area "A1" of the relay device memory means 24 (see Fig. 5A).

Then, the relay device transmission means 27 of the third relay device 20c transmits the communication information 29c to the second relay device 20b (step S206).

When the relay device reception means 21 of the second relay device 20b receives the communication information 29c, communication information 29b (see Fig. 5A) is created, according to the operation of step S201 ∼ S205, and transmitted to the upper first relay device 20a, (step S206), similarly to the third relay device 20c.

When the relay device reception means 21 of the first relay device 20a receives the communication information 29b, communication information 29a (see Fig. 5B), is created according to the operation of step S201 ∼ S205, and transmitted to the access point 10 (step S206), similarly to the third relay device 20c.

In the access point 10, as shown in Fig. 5B the processor unit (not shown) of the access point 10 obtains the ID of the second adapter 30b which is a final transmission destination device, the ID of the first relay device 20a which is an initial transmission destination, and the route information (in the present embodiment, b, c, b), from the communication information 29a received in the access point reception means 14 of the access point 10. The processor unit of the access point 10 stores in the memory area "b" of the access point memory means 11, the ID of the second adapter 30b, the ID of the first relay device 20a and the route information such that they are associated with each other (in the present embodiment, in the form of a table). In this case, the processor unit of the access point 10 rearranges the received route information in a direction from the access point 10 to the second adapter 30b, and stores the resulting route information in the access point memory means 11. Alternatively, the processor unit of the access point 10 may store the obtained IDs and the memory areas in the form of a map in the access point memory means 11.

In the above described manner, the route information indicating the route leading to the second adapter 30b is created, and the created route information and the ID of the second adapter 30b are registered in the access point 10. Thus, the route information indicating the route leading to the second adapter 30b is created such that ID of each communication device present in the route is formed by the memory area which is information shorter in length than this ID.

### (2) Transmission of meter reading request information

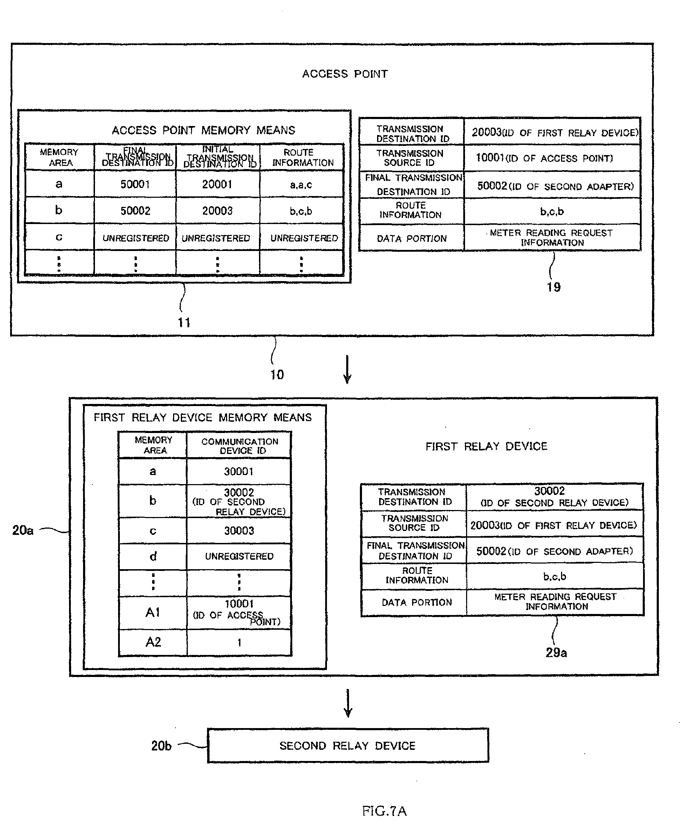

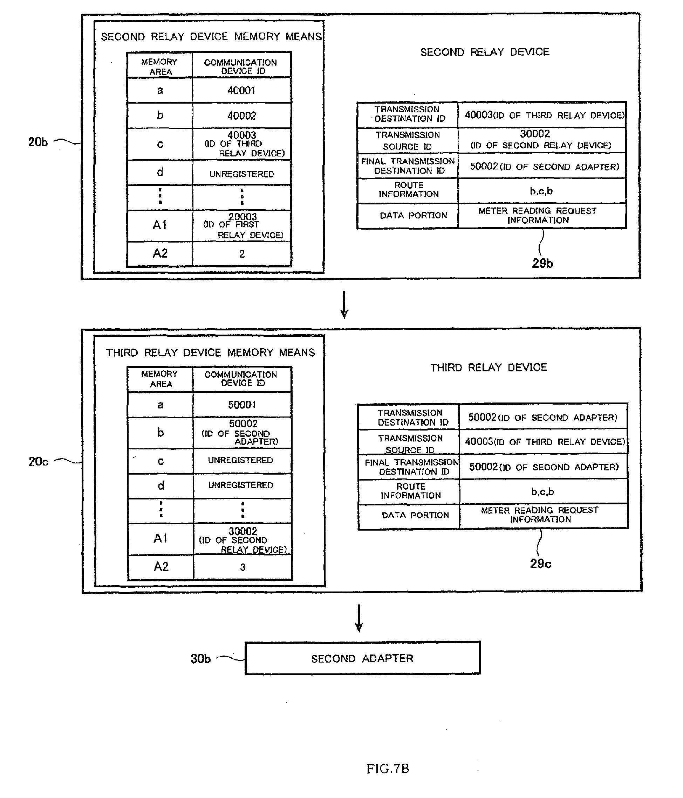

Next, a description will be given of the operation of the access point 10 for transmitting the meter reading request information for commanding the adapter 30 (in the present embodiment, the second adapter 30b) which is the final transmission destination, to read a value of a meter of gas, tap water, electricity, etc., with reference to Figs. 1 ∼ 4, Fig. 6, Fig. 7A and Fig. 7B.

Figs. 7A and 7B are schematic views showing the operation for transmitting meter reading request information in the automated radio meter reading system according to Embodiment 1.

As described above, it is assumed that the route information indicating the route from the access point 10 to the second adapter 30b is stored in the memory area "b" of the access point memory means 11 of the access point 10. The processor unit of the access point 10 creates communication information 19 which is a meter reading request command (see Fig. 7A).

To be specific, the processor unit of the access point 10 obtains the ID 10001 of itself from the access point memory means 11 and incorporates this ID (10001) into the communication information 19 as a transmission source ID. In addition, the processor unit of the access point 10 obtains the ID 50002 of the second adapter 30b which is the final transmission destination, the ID 20003 of the first relay device 20a which is the (initial) transmission destination, and the route information "b, c, b", from the memory area "b" of the access point memory means 11, and incorporates the respective information into the communication information 19. Furthermore, the processor unit of the access point 10 puts the meter reading request information into a data portion of the communication information 19.

The access point transmission means 13 of the access point 10 transmits the communication information 19 to the relay device reception means 21 of the first relay device 20a. When the relay device reception means 21 of the first relay device 20a receives the communication information 19, the following operation is performed. Now, the operation of the first relay device 20a will be described with reference to Fig. 6.

As shown in Fig. 6, when the relay device reception means 21 of the first relay device 20a receives the communication information 19 (step S201), the determiner means 22 of the first relay device 20a determines whether or not the route register information is contained in the communication information 19 (step S202). If the determiner means 22 of the first relay device 20a determines that the route register information is not contained in the communication information 19 received in the relay device reception means 21 in step S201 (NO in step S202), it determines that the meter reading request information or the meter reading response information is contained in the communication information 19, and the process goes to step S207.

In step S207, the determiner means 22 of the first relay device 20a determines whether or not the transmission source ID contained in the communication information 19 is ID of a lower communication device stored in the relay device memory means 24 of the first relay device 20a. If the determiner means 22 of the first relay device 20a determines that the transmission source ID contained in the communication information 19 is not the ID of the lower communication device (NO in step S207), it determines that the meter reading request information is contained in the communication information 19, and the process goes to step S208. Later, a description will be given of a case where the transmission source ID contained in the communication information 19 is the ID of the lower communication device in step S207.

In step S208, the reading means 23 of the first relay device 20a reads the route information of the communication information 19. The transmission destination identifying means 25 of the first relay device 20a reads information (in Embodiment 1, "b") described in a first order from the left in the route information of the communication information 19, with reference to the identifying information (in Embodiment 1, "1") stored in a memory area "A2" of the relay device memory means 24. Then, the transmission destination identifying means 25 of the first relay device 20a identifies the ID (in Embodiment 1, "30002 which is the ID of the second relay device 20b") of the communication device stored in the memory area "b" of the relay device memory means 24, as ID of a communication device which is a next transmission destination (step S209).

Then, the route information creating means 26 of the first relay device 20a updates the communication information 19 into the communication information 29a (step S210). To be specific, the route information creating means 26 of the first device 20a changes the transmission source ID of the communication information 19 into "30002" of the ID of itself, and changes the transmission destination ID of the communication information 19 into "30002" of the ID of the second relay device 20b, which is identified in step S209 (see Fig. 7A). Then, the relay device transmission means 27 of the first relay device 20a transmits the communication information 29a to the second relay device 20b (step S211).

When the relay device reception means 21 of the second relay device 20b receives the communication information 29a, communication information 29b (see Fig. 7B) is created according to the operation in steps S201, S202, and S207 ∼ S210, and transmitted to the third relay device 20c (step S211), similarly to the first relay device 20a.

When the relay device reception means 21 of the third relay device 20c receives the communication information 29b, communication information 29c (see Fig. 7B) is created according to the operation in steps S201, S202, and S207 ∼ S210, and transmitted to the second adapter 30b (step S211), similarly to the first relay device 20a.

Then, the adapter reception means 31 of the second adapter 30b receives the communication information 29c. Then, the meter reading means 32 of the second adapter 30b reads a value of the meter of gas, tap water or electricity, etc..

Note that each relay device 20 may delete the information referred to by itself, from the route information, after identifying the ID of a next transmission destination device. In this case, the transmission destination identifying means 25 of the relay device 20 has only to refer to the information described in a first order in the route information read by the reading means 23. This eliminates a need to store the identifying information, thus making it possible to eliminate the memory area "A2" of the relay device 10.

### (3) Transmission of meter reading response information

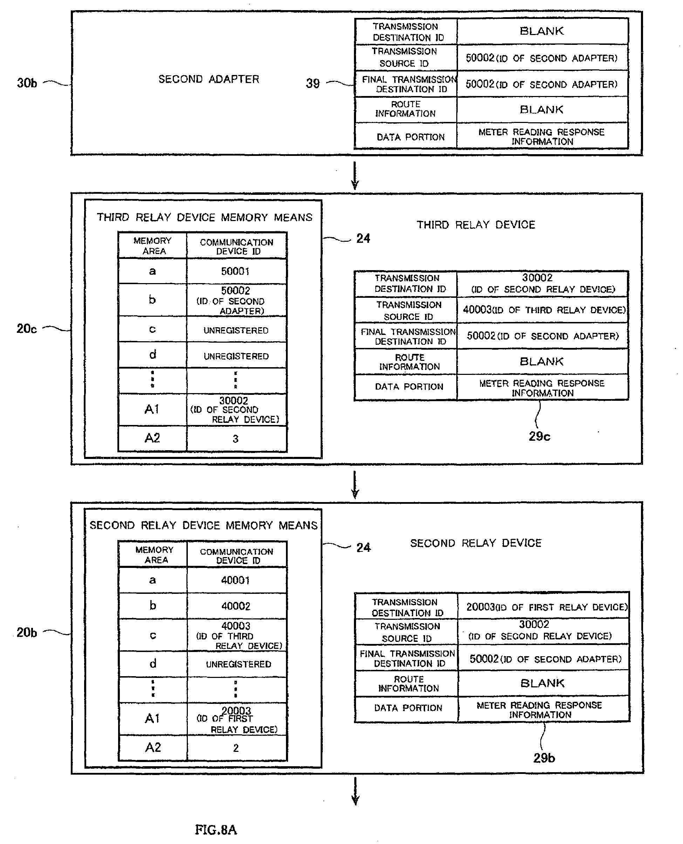

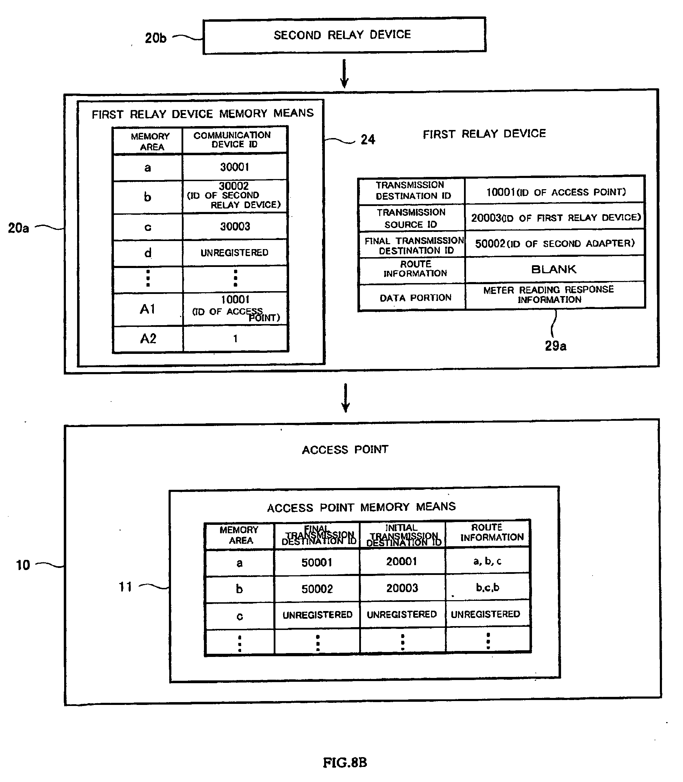

Next, a description will be given of the operation of the adapter 30 (in the present embodiment, second adapter 30b) for transmitting the meter reading response information, i.e., result of reading of the meter value of gas, tap water, electricity, etc., with reference to Figs. 1 ∼ 4, Fig. 6, Fig. 8A and 8B.

Figs. 8A and 8B are schematic views showing the operation for transmitting meter reading response information in the automated radio meter reading system according to Embodiment 1.

As described above, after the access point 10 transmits the meter reading request information, the second adapter 30b receives the meter reading request information, and the meter reading means 32 of the second adapter 30b reads the meter value of gas, tap water, electricity, etc. (meter reading value), the processor unit of the second adapter 30b creates the communication information 39 which is a meter reading response command, based on the meter reading value. In this case, the processor unit of the second adapter 30b may create the communication information 39, based on the meter reading value stored in the adapter memory means 33.

To be specific, the processor unit of the second adapter 30b obtains the ID 50002 of itself from the adapter memory means 33, and incorporates this ID (50002) into the communication information 39 as the transmission source ID and the final transmission destination ID from the access point 10. The processor unit of the second adapter 30b puts the meter reading response information and the meter reading value into the data portion of the communication information 39.

Then, the adapter transmission means 34 of the second adapter 30b transmits the communication information 39. As described above, it is assumed that the relay device reception means 21 of the third relay device 20c receives the communication information 39. When the relay device reception means 21 of the third relay device 20c receives the communication information 39, the following operation is performed. Hereinafter, the operation of the third relay device 20c will be described with reference to Fig. 6.

As shown in Fig. 6, when the relay device reception means 21 of the third relay device 20c receives the communication information 39 (step S201), the determiner means 22 of the third relay device 20c determines whether or not the route register information is contained in the communication information 39 (step S202). If the determiner means 22 of the third relay device 20c determines that the route register information is not contained in the communication information 39 received in the relay device reception means 21 in step S201 (NO in step S202), it determines that the meter reading request information or the meter reading response information is contained in the communication information 19, and the process goes to step S207.

In step S207, the determiner means 22 of the third relay device 20c determines whether or not the transmission source ID contained in the communication information 39 is ID of a lower communication device which is stored in the relay device memory means 24 of the third relay device 20c. Then, if the determiner means 22 of the third relay device 20c determines that the transmission source ID contained in the communication information 39 is the ID of the lower communication device (YES in step S207), it determines that the meter reading response information is contained in the communication information 39, and the process goes to step S212.

In step S212, the route information creating means 26 of the third relay device 20c updates the communication information 39 into the communication information 29a. To be specific, the route information creating means 26 of the third relay device 20c changes the transmission source ID of the communication information 39 into "40003" which is the ID of itself, and changes the transmission destination ID of the communication information 39 into "30002" which is the ID of the second relay device 20b, which is pre-stored in the memory area "A1" of the relay device memory means 24 (see Fig. 8A).

Then, the relay device transmission means 27 of the third relay device 20c transmits the communication information 29c to the second relay device 20b (step S213).

When the relay device reception means 21 of the second relay device 20b receives the communication information 29c, the communication information 29b (see Fig. 8A) is created according to the operation in step S201, S202, S207, and S212, and transmitted to the first relay device 20a (step S213), similarly to the third relay device 20c.

When the relay device reception means 21 of the first relay device 20a receives the communication information 29b, the communication information. 29a (see Fig. 8B) is created according to the operation in step S201, S202, S207, and S212, and transmitted to the access point 10 (step S213), similarly to the third relay device 20c.

In the manner described above, the access point memory means 11 of the access point 10 obtains the meter value read by the second adapter 30b from the communication information 29a received.

In the automated radio (wireless) meter reading system 100 of Embodiment 1, in any of the cases where the route information is created, the meter reading request information is transmitted, and the meter reading response information is transmitted, destination (route information) of the communication information can be made short in length. This makes it possible to transmit and receive the communication information, even when there is a time limitation, for example, a time period per transmission and reception must be set within several seconds (e.g., one second). In the automated radio meter reading system 100 of Embodiment 1, since the communication information is shorter in length, the amount of current consumption required to transmit and receive the telegram can be reduced, and the number of data incorporated into the communication information (telegram) can be increased.

Although in Embodiment 1, the access point memory means 11 of the access point 10 is configured to store "b, c, b" as the route information, the present invention is not limited to this. The access point memory means 11 of the access point 10 stores the ID of the second adapter 30b. Therefore, the access point memory means 11 may be configured not to store the information (in the present embodiment "b") for specifying the memory area of the third relay device 20c which is the relay device 20 immediately before the second adapter 30b, into the route information. In this case, since the communication information contains the ID number of the second adapter 30b which is the final transmission destination, and route information (in the present embodiment, b, c) indicating the route to the third relay device 20c, the ID of the second adapter 30b may not be stored in the memory area of the relay device memory means 24 of the third relay device 20c.

Numerous modifications and alternative embodiments of the invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied and all modifications which come within the scope of the appended claims are reserved.

### Industrial Applicability

A relay device, an automated radio (wireless) meter reading system including the relay device, and a relay method of the present invention are useful, because a transmission and reception time period can be made short in length by making route information contained in communication information shorter, and thus the amount of current consumption at the radio transmission and reception can be reduced.

The relay device and relay method of the present invention are applicable to uses of supervising system communication networks.

### Reference Sings Lists

- 10: access point
- 11: access point memory means
- 12: information creating means
- 13: access point transmission means
- 14: access point reception means
- 15: access point electric power supply means
- 19: communication information
- 20: relay device
- 20a: first relay device
- 20b: second relay device
- 20c: third relay device
- 20d: M1-th relay device
- 21: relay device reception means
- 22: determiner means
- 23: reading means
- 24: relay device memory means
- 25: transmission destination identifying means
- 26: route information creating means
- 27: relay device transmission means
- 28: relay device electric power supply means
- 29a: communication information
- 29b: communication information
- 29c: communication information
- 30: adapter
- 30a: first adapter
- 30b: second adapter
- 30c: N1-th adapter
- 31: adapter reception means
- 32: meter reading means
- 33: adapter memory means
- 34: adapter transmission means
- 35: adapter electric power supply means
- 39: communication information
- 100: automated radio meter reading system

## Claims

1. A relay device (20) for relaying communication information communicated between an access point (10) and an adapter (30) in an automated radio meter reading system (100), said relay device (20) comprising:
reception means for receiving the communication information (19, 29, 39) transmitted to said relay device (20) itself;
memory means (24) having one or more memory areas, the memory means (24) being configured to store ID of a communication device (10, 20, 30) being the adapter (30) or another first relay device (20) which is located closer to the adapter (30) than said relay device (20) itself, and ID of a communication device (10, 20, 30) being the access point (10) or another second relay device (20) which is located closer to the access point (10) than said relay device (20) itself, which is a next transmission destination, in the respective memory areas;
reading means (23) for reading route information from the communication information (19, 29, 39), said route information including information specifying the memory area containing the ID of the communication device (10,20,30) which is the next transmission destination and indicating a route constituted by the communication devices (10, 20, 30) provided in a range from at least said relay device (20) itself to a final transmission destination, wherein in the route the communication devices (10, 20, 30) are relay devices (20) and the final transmission device is the adapter (30), wherein the route information is information specifying memory areas in an order of relay devices (20) arranged in a route from the access point (10) to the adapter (30);
transmission destination identifying means (25) for identifying the ID of the communication device (10, 20, 30) which is the next transmission destination, based on the memory area stored in the memory means (24), and the route information read by the reading means (23), wherein the transmission destination identifying means (25) reads information (19, 29, 39) from the route information with respect to the order stored in the memory area; and
a transmission means (27) for transmitting the communication information (19, 29, 39) to the communication device (10, 20, 30) being the next transmission destination identified by the transmission destination identifying means (25).

2. The relay device (20) according to claim 1,
wherein the communication information (19, 29, 39) includes ID of a transmission source;
said relay device (20) further comprising:
a determiner means (22) for determining whether or not the ID of the transmission source matches ID stored in the memory means (24); and
a route information creating means (26) for updating the communication information (19, 29, 39) such that route information specifying a memory area of the memory means (24) in which the ID of the transmission source is stored is added to the route information, when the determiner means (22) determines that the ID of the transmission source matches the ID stored in the memory means (24);
wherein the transmission means (27) transmits the communication information (19, 29, 39) updated by the route information creating means to a transmission destination pre-registered.

3. The relay device (20) according to claim 1 or 2,
wherein said route information creating means (26) updates the communication information (19, 29, 39) such that the ID of the transmission source is stored in a memory area of the memory means (24) and said memory area of the memory means (24) in which the ID of the transmission source is stored is added to the route information, when the determiner means (22) determines that the ID of the transmission source does not match the ID stored in the memory means (24).

4. The relay device (20) according to claim 1,
wherein the transmission destination identifying means (25) deletes information contained in the route information and identifying said relay device (20) itself, from the route information, before the transmission means (27) transmits the communication information (19, 29, 39).

5. The relay device (20) according to any one of claims 1 to 4,
wherein the memory means (24) stores in a table or a map, a correspondence between ID of the next transmission destination and the memory area.

6. An automated radio meter reading system (100) comprising:
the relay device (20) as recited in any one of claims 1 to 5,
an access point (10); and
an adapter (30).

7. The automated radio meter reading system (100) according to claim 6,
wherein the access point (10) includes a memory means (11) for storing in each of memory areas, ID of the adapter (30), ID of a relay device (20) located in a first order in a route leading to the adapter (30), and route information indicating the route leading to the adapter (30).

8. The automated radio meter reading system (100) according to claim 7,
wherein the memory means (11) of the access point (10) is configured to store in a table or a map, the ID of the adapter (30), the ID of the relay device (20) located in the first order in the route leading to the adapter (30), and a correspondence between the route information indicating the route leading to the adapter (30) and the memory area.

9. The automated radio meter reading system (100) according to any one of claims 6 to 8,
wherein the adapter (30) includes a memory means (33) containing ID of said adapter (30) itself.

10. A relay method of relaying communication information communicated between an access point (10) and an adapter (30) in an automated meter reading system (100), by means of a relay device (20), comprising the steps of:
storing, by means of memory means (24) having one or more memory areas, ID of a communication device (10, 20, 30) being the adapter (30) or another first relay device (20) which is located closer to the adapter (30) than said relay device (20) itself, and ID of a communication device (10, 20, 30) being the access point (10) or another second relay device (20) which is located closer to the access point (10) than said relay device (20) itself, which is a next transmission destination, in the respective memory areas;
receiving, by means of reception means, the communication information (19, 29, 39) transmitted to the relay device (20) itself;
reading, by means of reading means (23), route information from the communication information (19, 29, 39), said route information including information specifying the memory area containing the ID of the communication device (10, 20, 30) which is the next transmission destination and indicating a route constituted by the communication devices (10, 20, 30) provided in a range from at least said relay device (20) itself to a final transmission destination, wherein in the route the communication devices (10, 20, 30) are relay devices (20) and the final transmission device is the adapter (30), wherein the route information is information specifying memory areas in an order of relay devices (20) arranged in a route from the access point (10) to the adapter (30);
identifying, by means of transmission destination identifying means (25), the ID of the communication device (10, 20, 30) which is the next transmission destination, based on the memory area stored in the memory means (24), and the route information read by the reading means (23), wherein the transmission destination identifying means (25) reads information (19, 29, 39) from the route information with respect to the order stored in the memory area; and
transmitting, by means of transmission means (27), the communication information (19, 29, 39) to the communication device (10, 20, 30) being the next transmission destination identified by the transmission destination identifying means (25).

## Patentansprüche

1. Weiterleitungsvorrichtung (20) zum Weiterleiten von Kommunikationsinformationen, die zwischen einem Zugriffspunkt (10) und einem Adapter bzw. Anschluss (30) in einem automatisierten Funkmessgerätablesesystem (100) kommunizieren, wobei die Weiterleitungsvorrichtung (20) aufweist:
Empfangsmittel zum Empfangen der Kommunikationsinformationen (19, 29, 39), die zu der Weiterleitungsvorrichtung (20) selbst übertragen werden;
Speichermittel (24), die einen oder mehrere Speicherbereiche aufweisen, wobei das Speichermittel (24) konfiguriert ist, um eine ID von einer Kommunikationsvorrichtung (10, 20, 30), die der Adapter bzw. Anschluss (30) oder eine andere erste Weiterleitungsvorrichtung (20) ist, welche näher an dem Adapter bzw. Anschluss (30) angeordnet ist, als die Weiterleitungsvorrichtung (20) selbst, und eine ID von einer Kommunikationsvorrichtung (10, 20, 30) speichert, die ein Zugriffspunkt (10) oder eine andere zweite Weiterleitungsvorrichtung (20) ist, welche näher an dem Zugriffspunkt (10) angeordnet ist, als die Weiterleitungsvorrichtung (20) selbst, welche ein nächstes Übertragungsziel ist, und zwar in den jeweiligen Speicherbereichen;
Lesemittel (23) zum Lesen von Routeninformation bzw. Wegeinformation von den Kommunikationsinformationen (19, 29, 39), wobei die Routeninformation bzw. Wegeinformation Informationen einschließt, die den Speicherbereich spezifizieren, der die ID der Kommunikationsvorrichtung (10, 20, 30) beinhaltet, welche das nächste Übertragungsziel ist, und eine Route bzw. einen Weg anzeigt, die bzw. der durch die Kommunikationsvorrichtungen (10, 20, 30) festgelegt ist, die in einem Bereich von zumindest der Weiterleitungsvorrichtung (20) selbst zu einem Endübertragungsziel bereit gestellt sind, wobei in bzw. bei der Route bzw. dem Weg der Kommunikationsvorrichtungen (10, 20, 30) Weiterleitungsvorrichtungen (20) sind, und die Endübertragungsvorrichtung der Adapter bzw. Anschluss (30) ist, wobei die Routeninformation bzw. Wegeinformation Information ist, die Speicherbereiche spezifiziert, und zwar in einer Reihenfolge von Weiterleitungsvorrichtungen (20), die in einer Route bzw. einem Weg von dem Zugriffspunkt (10) zu dem Adapter bzw. Anschluss (30) angeordnet sind;
Übertragungszielidentifierungsmittel (25) zum Identifizieren der ID der Kommunikationsvorrichtung (10, 20, 30), welche das nächste Übertragungsziel ist, und zwar basierend auf dem Speicherbereich, der in dem Speichermittel (24) gespeichert ist, und der Routeninformation bzw. Wegeinformation, die durch das Lesemittel (23) gelesen ist, wobei das Übertragungszielidentifizierungsmittel (25) Informationen (19, 29, 39) von der Routeninformation bzw. Wegeinformation liest, und zwar mit Bezug auf die Reihenfolge, die in dem Speicherbereich gespeichert ist; und
Übertragungsmittel (27) zum Übertragen der Kommunikationsinformation (19, 29, 39) zu der Kommunikationsvorrichtung (10, 20, 30), die das nächste Übertragungsziel ist, das durch das Übertragungszielidentifizierungsmittel (25) identifiziert ist.

2. Weiterleitungsvorrichtung (20) nach Anspruch 1,
wobei die Kommunikationsinformation (19, 29, 39) eine ID einer Übertragungsquelle einschließt;
wobei die Weiterleitungsvorrichtung (20) weiter aufweist:
ein Bestimmungsmittel (22) zum Bestimmen ob oder ob nicht die ID der Übertragungsquelle mit der ID, die in dem Speichermittel (24) gespeichert ist, übereinstimmt; und
ein Routeninformationserzeugungsmittel (26) zum Aktualisieren der Kommunikationsinformationen (19, 29, 39), und zwar derart, dass die Routeninformation bzw. Wegeinformation, die einen Speicherbereich des Speichermittels (24) in welchem die ID der Übertragungsquelle gespeichert ist, spezifiert, zu der Routeninformation bzw. Wegeinformation hinzugefügt wird, wenn das Bestimmungsmittel (22) bestimmt, dass die ID der Übertragungsquelle mit der ID, die in dem Speichermittel (24) gespeichert ist, übereinstimmt;
wobei das Übertragungsmittel (27) die Kommunikationsinformation (19, 29, 39) überträgt, die durch das Routeninformationserzeugungsmittel aktualisiert ist, und zwar zu einem Übertragungsziel, das vorregistriert ist.

3. Weiterleitungsvorrichtung nach Anspruch 1 oder 2,
wobei das Routeninformationserzeugungsmittel (26) die Kommunikationsinformation (19, 29, 39) aktualisiert, und zwar derart, dass die ID der Übertragungsquelle in einem Speicherbereich des Speichermittels (24) und der Speicherbereich des Speichermittels (24) in welchem die ID der Übertragungsquelle gespeichert ist, zu der Routeninformation bzw. Wegeinformation hinzugefügt ist bzw. wird, wenn das Bestimmungsmittel (22) bestimmt, dass die ID der Übertragungsquelle nicht mit der ID übereinstimmt, die in dem Speichermittel (24) gespeichert ist.

4. Weiterleitungsvorrichtung (20) nach Anspruch 1,
wobei das Übertragungszielidentifizierungsmittel (25) Informationen löscht, die in der Routeninformation bzw. Wegeinformation beinhaltet sind, und die Weiterleitungsvorrichtung (20) selbst identifiziert, und zwar von der Routeninformation bzw. Wegeinformation, und zwar bevor das Übertragungsmittel (27) die Kommunikationsinformation (19, 29, 39) überträgt.

5. Weiterleitungsvorrichtung (20) nach irgendeinem der Ansprüche 1 bis 4,
wobei das Speichermittel (24) eine Korrespondenz zwischen der ID des nächsten Übertragungsziels und dem Speicherbereich in einer Tabelle oder einer Karte speichert.

6. Automatisertes Funkmessgerätablesesystem (100), das aufweist:
die Weiterleitungsvorrichtung (20) nach irgendeinem der Ansprüche 1 bis 5,
einen Zugriffspunkt (10); und
einen Adapter bzw. Anschluss (30).

7. Automatisiertes Funkmessgerätablesesystem (100) nach Anspruch 6,
wobei der Zugriffspunkt (10) ein Speichermittel (11) zum Speichern in jedem von den Speicherbereichen, einer ID des Adapters bzw. Anschlusses (30), einer ID einer Weiterleitungsvorrichtung (20), die in einer ersten Reihe bzw. Reihenfolge oder Rangfolge in einer Route angeordnet ist, die zu dem Adapter bzw. Anschluss (30) führt, und einer Routeninformation bzw. Wegeinformation, die die Route bzw. den Weg anzeigt, die bzw. der zu dem Adapter bzw. Anschluss (30) führt, einschließt.

8. Automatisiertes Funkmessgerätablesesystem (100) nach Anspruch 7,
wobei das Speichermittel (11) des Zugriffpunkts (10) konfiguriert ist, um in einer Tabelle oder einer Karte die ID des Adapters bzw. Anschlusses (30), die ID der Weiterleitungsvorrichtung (20), die in der ersten Reihe bzw. Reihenfolge oder Rangfolge in der Route bzw. dem Weg angeordnet ist, der zu dem Adapter bzw. Anschluss (30) führt, und eine Korrespondenz zwischen der Routeninformation bzw. Wegeinformation, die die Route bzw. den Weg anzeigt, der zu dem Adapter bzw. Anschluss (30) führt und dem Speicherbereich speichert.

9. Automatisiertes Funkmessgerätablesesystem (100) nach irgendeinem der Ansprüche 6 bis 8, wobei der Adapter bzw. Anschluss (30) ein Speichermittel (33) einschließt, das eine ID von dem Adapter bzw. Anschluss (30) selbst beinhaltet.

10. Weiterleitungsverfahren zum Weiterleiten von Kommunikationsinformationen, die zwischen einem Zugriffspunkt (10) und einem Adapter bzw. Anschluss (30) in einem automatisierten Messgerätablesesystem (100) kommuniziert werden, und zwar mittels einer Weiterleitungsvorrichtung (20), welches die folgenden Schritte aufweist:
Speicherung mittels eines Speichermittels (24), das einen oder mehrere Speicherbereiche aufweist, von einer ID von einer Kommunikationsvorrichtung (10, 20, 30), die der Adapter bzw. Anschluss (30) oder eine andere erste Weiterleitungsvorrichtung (20) ist, welche näher an dem Adapter bzw. Anschluss (30) angeordnet ist als die Weiterleitungsvorrichtung (20) selbst, und einer ID von einer Kommunikationsvorrichtung (10, 20, 30), die der Zugriffspunkt (10) oder eine andere zweite Weiterleitungsvorrichtung (20) ist, welche näher an dem Zugriffspunkt (10) angeordnet ist als die Weiterleitungsvorrichtung (20) selbst, welche ein nächstes Übertragungsziel ist, und zwar in den jeweiligen Speicherbereichen;
Empfangen mittels eines Empfangsmittels, von Kommunikationsinformation (19, 29, 39), die zu der Weiterleitungsvorrichtung (20) selbst übertragen ist bzw. wird;
Lesen, mittels eines Lesemittels (23), von Routeninformation bzw. Wegeinformation von der Kommunikationsinformation (19, 29, 39), wobei die Routeninformation bzw. Wegeinformation, die Information einschließt, die den Speicherbereich spezifiziert, der die ID der Kommunikationsvorrichtung (10, 20, 30) beinhaltet, welche das nächste Übertragungsziel ist, und eine Route bzw. einen Weg anzeigt, die bzw. der durch die Kommunikationsvorrichtungen (10, 20, 30) festgelegt ist, die in einem Bereich von zumindest der Weiterleitungsvorrichtung (20) selbst zu einem Endübertragungsziel bereit gestellt sind, wobei in bzw. bei der Route bzw. dem Weg die Kommunikationsvorrichtungen (10, 20, 30) Weiterleitungsvorrichtungen (20) sind, und die Endübertragungsvorrichtung der Adapter bzw. Anschluss (30) ist, wobei die Routeninformation bzw. Wegeinformation Information ist, die Speicherbereiche spezifiziert, und zwar in einer Reihenfolge der Weiterleitungsvorrichtungen (20), die in einer Route bzw. einem Weg von dem Zugriffspunkt (10) zu dem Adapter bzw. Anschluss (30) angeordnet sind;
Identifizierung, mittels eines Übertragungszielidentifizierungsmittels (25), der ID der Kommunikationsvorrichtung (10, 20, 30), welche das nächste Übertragungsziel ist, und zwar basierend auf dem Speicherbereich, der in dem Speichermittel (24) gespeichert ist, und der Routeninformation bzw. Wegeinformation, die durch das Lesemittel (23) gelesen ist, wobei das Übertragungszielidentifizierungsmittel (25) Information (19, 29, 39) von der Routeninformation bzw. Wegeinformation liest, und zwar mit Bezug auf die Reihenfolge, die in dem Speicherbereich gespeichert ist; und
Übertragung, mittels eines Übertragungsmittels (27), der Kommunikationsinformation (19, 29, 39) zu der Kommunikationsvorrichtung (10, 20, 30), die das nächste Übertragungsziel ist, das durch das Übertragungszielidentifizierungsmittel (25) identifiziert ist.

## Revendications

1. Dispositif de relais (20) pour relayer une information de communication transmise entre un point d'accès (10) et un adaptateur (30) dans un système radio de lecture automatique de compteur (100), où le dispositif de relais (20) comprend :
un moyen de réception pour recevoir l'information de communication (19, 29, 39) transmise au dispositif de relais (20) lui-même ;
un moyen de mémoire (24) comportant une ou plusieurs zones de mémoire, les moyens de mémoire (24) étant configurés pour stocker dans les zones de mémoires respectives un ID d'un dispositif de communication (10, 20, 30) formé par l'adaptateur (30) ou d'un autre premier dispositif de relais (20) plus proche de l'adaptateur (30) que ledit dispositif de relais (20), et l'ID d'un dispositif de communication (10, 20, 30) formé par le point d'accès (10) ou d'un autre second dispositif de relais (20) plus proche du point d'accès (10) que ledit dispositif de relais (20), formant la prochaine destination de transmission ;
un moyen de lecture (23) pour lire une information de routage de l'information de communication (19, 29, 39), ladite information de routage comprenant une information précisant la zone de mémoire contenant l'ID du dispositif de communication (10, 20, 30) formant la prochaine destination de transmission et indiquant un chemin formé par les dispositifs de communication (10, 20, 30) situés à l'intérieur de la portée entre au moins ledit dispositif de relais (20) et une destination de transmission finale, où les dispositifs de communication (10, 20, 30) le long du chemin sont des dispositifs de relais (20) et le dispositif de transmission final est l'adaptateur (30), où l'information de routage est une information précisant des zones de mémoire dans l'ordre des dispositifs de relais (20) disposés sur un chemin entre le point d'accès (10) et l'adaptateur (30) ;
un moyen d'identification de la destination de transmission (25) pour identifier l'ID du dispositif de communication (10, 20, 30) formant la prochaine destination de transmission sur la base de la zone de mémoire stockée dans le moyen de mémoire (24) et de l'information de routage lue par le moyen de lecture (23), où le moyen d'identification de la destination de transmission (25) lit l'information (19, 29; 39) de l'information de routage en fonction de l'ordre stocké dans la zone de mémoire ; et
un moyen de transmission (27) pour transmettre l'information de communication (19, 29, 39) au dispositif de communication (10, 20, 30) formant la prochaine destination de transmission identifiée par le moyen d'identification d'une destination de transmission (25).

2. Dispositif de relais (20) selon la revendication 1,
où l'information de communication (19, 29, 39) comprends l'ID d'une source de transmission ;
ledit dispositif de relais (20) comprenant en outre :
un moyen de détermination (22) pour déterminer si l'ID de la source de transmission correspond ou non à l'ID stockée dans le moyen de mémoire (24) ; et
un moyen de création d'une information de routage (26) pour mettre à jour l'information de communication (19, 29, 39) de telle manière que l'information de routage spécifiant une zone de mémoire du moyen de mémoire (24) dans laquelle est stockée l'ID de la source de transmission est ajoutée à l'information de routage lorsque le moyen de détermination (22) détermine que l'ID de la source de transmission correspond à l'ID stockée dans le moyen de mémoire (24) ;
où un moyen de transmission (27) transmet une information de communication (19, 29, 39) mise à jour par le moyen de création d'une information de routage à une destination de transmission préenregistrée.

3. Dispositif de relais (20) selon la revendication 1 ou 2,
où ledit moyen de création d'une information de routage (26) met à jour l'information de communication (19, 29, 39) de telle manière que l'ID de la source de transmission est stockée dans une zone de mémoire du moyen de mémoire (24) et ladite zone de mémoire du moyen de mémoire (24) dans laquelle est stockée l'ID de la source de transmission est ajoutée à l'information de routage lorsque le moyen de détermination (22) détermine que l'ID de la source de transmission ne correspond pas à l'ID stockée dans le moyen de mémoire (24).

4. Dispositif de relais (20) selon la revendication 1,
où le moyen d'identification de destination de transmission (25) efface l'information contenue dans l'information de routage et identifiant ledit dispositif de relais (20) de l'information de routage avant que le moyen de transmission (27) ne transmette l'information de communication (19, 29, 39).

5. Dispositif de relais (20) selon l'une quelconque des revendications 1 à 4,
où le moyen de mémoire (24) stocke dans un tableau ou un diagramme une correspondance entre l'ID de la prochaine destination de transmission et la zone de mémoire.

6. Système radio de lecture automatique de compteur (100) comprenant :
le dispositif de relais (20) selon l'une quelconque des revendications 1 à 5,
un point d'accès (10) ; et
un adaptateur (30).

7. Système radio de lecture automatique de compteur (100) selon la revendication 6,
où le point d'accès (10) comporte un moyen de mémoire (11) pour stocker dans chaque zone de mémoire l'ID de l'adaptateur (30), l'ID d'un dispositif de relais (20) disposé dans un premier ordre sur un chemin menant à l'adaptateur (30) et une information de routage indiquant le chemin menant à l'adaptateur (30).

8. Système radio de lecture automatique de compteur (100) selon la revendication 7,
où le moyen de mémoire (11) du point d'accès (10) est configuré pour stocker dans un tableau ou un diagramme l'ID de l'adaptateur (30), l'ID du dispositif de relais (20) disposé dans le premier ordre sur le chemin menant à l'adaptateur (30) et une correspondance entre l'information de routage indiquant le chemin menant à l'adaptateur (30) et la zone de mémoire.

9. Système radio de lecture automatique de compteur (100) selon l'une quelconque des revendications 6 à 8,
où l'adaptateur (30) comporte un moyen de mémoire (33) contenant l'ID dudit adaptateur (30).

10. Méthode de relais pour relayer une information de communication transmise entre un point d'accès (10) et un adaptateur (30) via un système radio de lecture automatique de compteur (100) au moyen d'un dispositif de relais (20), comprenant les étapes suivantes :
stockage, au moyen d'un moyen de mémoire (24) ayant une ou plusieurs zones de mémoire, dans les zones de mémoire respectives, de l'ID d'un dispositif de communication (10, 20, 30) pouvant être l'adaptateur (30) ou un autre premier dispositif de relais (20) plus proche de l'adaptateur (30) que le dispositif de relais (20), et de l'ID d'un dispositif de communication (10, 20, 30) pouvant être le point d'accès (10) ou un autre deuxième dispositif de relais (20) plus proche du point d'accès (10) que le dispositif de relais (20), formant la prochaine destination de transmission ;
réception, au moyen de moyens de réception, de l'information de communication (19, 29, 39) transmise au dispositif de relais (20) ;
lecture, au moyen de moyens de lecture (23) d'une information de routage contenue dans l'information de communication (19, 29, 39), ladite information de routage comprenant une information précisant la zone de mémoire contenant l'ID du dispositif de communication (10, 20, 30) formant la prochaine destination de transmission et indiquant un chemin formé par les dispositifs de communication (10, 20, 30) situés à l'intérieur de la portée entre au moins ledit dispositif de relais (20) et une destination de transmission finale, où les dispositifs de communication (10, 20, 30) sont des dispositifs de relais (20) le long du chemin et le dispositif de transmission final est l'adaptateur (30), où l'information de routage est une information précisant des zones de mémoire dans l'ordre des dispositifs de relais (20) disposés sur un chemin entre le point d'accès (10) et l'adaptateur (30) ;
identification, au moyen de moyens d'identification d'une destination de transmission (25) de l'ID du dispositif de communication (10, 20, 30) formant la prochaine destination de transmission sur la base de la zone de mémoire stockée dans le moyen de mémoire (24) et de l'information de routage lue par le moyen de lecture (23), où le moyen d'identification de la destination de transmission (25) lit l'information (19, 29, 39) de l'information de routage en fonction de l'ordre stocké dans la zone de mémoire ; et
transmission, au moyen d'un moyen de transmission (27) de l'information de communication (19, 29, 39) au dispositif de communication (10, 20, 30) formant la prochaine destination de transmission identifiée par le moyen d'identification d'une destination de transmission (25).
